# EUROPEAN PATENT SPECIFICATION

(11) **EP 3 819 332 B1**
(45) Date of publication and mention of the grant of the patent: **06.07.2022**
(21) Application number: 19207523.2
(22) Date of filing: 06.11.2019
(51) Int. Cl.: C08J 9/14, C08K 5/00, C08G 18/09, C08G 18/18, C08G 18/76, C08G 18/48, C08G 18/40, C08G 18/42, C08G 18/54, C08G 8/12, C08G 65/00, C08J 9/08, C08G 8/36, C08G 65/331, C08G 101/00

(54) **PROCESS FOR PRODUCING RIGID POLYURETHANE FOAMS**
VERFAHREN ZUR HERSTELLUNG VON POLYURETHAN-HARTSCHÄUMEN
PROCÉDÉ DE PRODUCTION DE MOUSSES DE POLYURÉTHANE RIGIDES

(43) Date of publication of application: 12.05.2021
(73) Proprietor: BASF SE, 67056 Ludwigshafen am Rhein (DE)
(72) Inventor: TOMOVIC, Zeljko, 5600 MB Eindhoven (NL); BERRES, Antonia, 83308 Trostberg (DE); KRAUS, Alexander, 83308 Trostberg (DE); ZARBAKHSH, Sirus, 67056 Ludwigshafen (DE); RENNER, Christian, 49448 Lemfoerde (DE)
(74) Representative: BASF IP Association

(56) References cited:
- WO-A1-2010/114695
- GB-A- 934 629
- DATABASE WPI Week 198827 Thomson Scientific, London, GB; AN 1988-185239 XP62948, & JP S63 120723 A (SUMITOMO DUREZ CO) 25 May 1988 (1988-05-25)

## Description

The present invention relates to an aromatic polyetherol (b1) obtainable by condensation of aromatic alcohol (b11) and aldehyde (b12) wherein the aromatic alcohol (b11) comprises a mixture, consisting of at least one alkoxylation product (b111) of an aromatic alcohol, the alkoxylation product (b111) having a hydroxyl value of 110 to 500 mg KOH/g and at least one alkylated aromatic alcohol (b112) which may be alkoxylated and wherein the alkyl group is bonded to the aromatic ring, the alkyl group having 4 to 18 carbon atoms, wherein the molar ratio of the alkoxylation product (b111) of the aromatic alcohol and the alkylated aromatic alcohol (b112) is in the range of 5 : 1 to 2 : 1 and the average OH-functionality of the polyetherol (b1) is 2 to 8. Further, the present invention relates to a method of producing a polyurethane rigid foam comprising mixing (a) polyisocyanate, (b) at least one compound having at least two hydrogen atoms reactive towards isocyanates, (c) optionally flame retardant, (d) blowing agent, (e) catalyst and (f) optionally further additives, to form a reaction mixture and reacting the reaction mixture to obtain the polyurethane based rigid foam, wherein the compound reactive towards isocyanates (b) comprises an aromatic polyetherol (b1) and a rigid polyurethane foam obtained by such a method.

Polyisocyanate based rigid foams foams have long been used in the construction industry for thermal insulation due to their extremely low thermal conductivity and high mechanical stability. They are often used as core layer of insulation boards with flexible cover and with rigid cover layers. Such insulation boards are often referred to as sandwich elements. Nowadays, such sandwich elements are produced in continuous operation for example on commonly known double belt lines or in discontinuous operation, e.g. on a so called flat coating line.

Polyisocyanate based rigid foams comprise polyurethane rigid foams and polyisocyanurate rigid foams. A polyisocyanurate rigid foam is usually understood to be a foam that contains both urethane and isocyanurate groups. In the context of the invention, the term rigid polyurethane foam is also intended to include rigid polyisocyanurate foam, whereby the production of polyisocyanurate foams is based on isocyanate ratios greater than 160. Polyurethane rigid foams are usually produced at an isocyanate index of 90 to less than 160.

A major problem of the polyisocyanurate rigid foams known today according to the state of the art is insufficient foam adhesion to the metallic surface layers. To remedy this deficiency, an adhesion promoter is usually applied between the top layer and the foam, as described for example in EP 1516720. In addition, high molding temperatures of > 60 °C are required during processing to ensure sufficient trimerization of the polyisocyanate components, which leads to a higher crosslinking density and thus to better temperature stability, compressive strength and flame resistance in the foam.

Compared to polyisocyanurate rigid foams, polyurethane rigid foams usually exhibit significantly better foam adhesion to the metallic surface layers and can be converted at significantly lower processing temperatures. To achieve the required fire resistance, however, a very high proportion of liquid halogen-containing flame retardants is usually required.

DE 19528537 A1 describes, for example, a process for the production of polyurethane rigid foams in which large quantities of chlorine, bromine and phosphorus compounds are used in the polyol component.

For ecotoxicological reasons and due to improved fire side effects, however, it is desirable to keep the use of halogenated flame retardants, especially brominated flame retardants, in the polyol component as low as possible. The pure use of halogen-free flame retardants liquid at room temperature in rigid polyurethane foams based on polyether polyols, especially in combination with conventional flammable physical blowing agents such as n-pentane or cyclopentane, either makes it impossible to achieve the necessary flame retardancy standards or requires severe restrictions in the mechanics or processing of the rigid foam. For example, when solid halogen-free flame retardants such as melamine, ammonium sulphate, expanded graphite and ammonium polyphosphate are used, dosing and processing problems occur and the mechanical properties of the rigid foam are significantly reduced at the same densities (see also EP 0665251 A2).

The compressive strength of rigid foams significantly determines the minimum foam density required for the manufacture of components and thus has a direct influence on material consumption and insulation properties. In addition, especially for the use as facade elements a high flame resistance of the polyisocyanate based foam is essential.

In the production of highly flame-retardant foams with high compressive strength, Novolac based polyetherols, also called phenolic polyols, are frequently used since they allow a high flame resistance and allow the reduction of flame retardants. This leads to better mechanical properties and allows to reduce density of the foam.

DE 1595509 describes the synthesis of Novolac resins and corresponding polyols obtained by propoxylation, as well as use of those polyols in combination with amino polyols for the preparation of PU foams.

WO2004/063243, WO2010/114695, WO2010/114703 and WO2012/083038 describe polyol composition suitable for the preparation of a rigid foam containing aromatic polyoxyalkylene polyol based on an initiator obtained from the condensation of a phenol with an aldehyde.

In WO2016/064948 rigid polyurethane foams are obtained from Novolac polyols which are obtained either by condensation of aromatic alcohols to phenolic resins and subsequent alkoxylation or by modification of aromatic alcohols, for example by alkoxylation, and subsequent condensation. In the examples section modified phenolic resins are used, which due to very high viscosities had to be diluted with TEP (27 to 42 %) as diluent.

Disadvantage of the phenolic polyols known in the state of the art is a high viscosity resulting in a poor processability. Furthermore, the solubility of blowing agents (e.g. pentane) in phenolic polyols is rather low, what often results in a bad surface quality of the foam and low adhesion of the rigid foam to cover layers of sandwich elements.

WO2011/003446 discloses the synthesis of multifunctional polyols based on alkylated phenol Cardanol. The application of these alkylated phenol-based resins improves pentane solubility and therefore the surface of pentane blown foams but leads to reduced mechanical properties of the foam obtained. Further, processabillity is difficult and the application often results in shrinkage of the foams produced.

Regarding the state of the art there is still the need to provide polyurethane rigid foams having further improved flame resistance and mechanical properties, especially compressive strength and dimension stability, as well as surface quality and adhesion of the rigid foam to conventional cover layers of sandwich elements. In addition, it was object of the present invention to provide a process for the production of a rigid polyurethane foam with good processability and low viscosity of the components.

Therefore, it was object of the present invention to provide a method for the production of rigid polyurethane foams having further improved flame resistance and mechanical properties as well as surface quality and adhesion of the rigid foam to conventional cover layers of sandwich elements and where their process of production shows good processability and a low viscosity of the components applied in the process.

The object of the present invention is solved by a method of producing a polyurethane rigid foam comprising mixing (a) polyisocyanate, (b) at least one compound having at least two hydrogen atoms reactive towards isocyanates, (c) optionally flame retardant, (d) blowing agent, (e) catalyst and (f) optionally further additives, to form a reaction mixture and reacting the reaction mixture to obtain the polyurethane based rigid foam, wherein the compound reactive towards isocyanates (b) comprises an aromatic polyetherol (b1) obtainable by condensation of aromatic alcohol (b11) and aldehyde (b12) wherein the aromatic alcohol (b11) comprises a mixture, consisting of an alkoxylation product (b111) of at least one aromatic alcohol, the alkoxylation product (b111) having a hydroxyl value of 110 to 500 mg KOH/g and at least one alkylated aromatic alcohol (b112) which may be alkoxylated and wherein the alkyl group is bonded to the aromatic ring, the alkyl group having 4 to 18 carbon atoms, wherein the molar ratio of the alkoxylation product (b111) of the aromatic alcohol and the alkylated aromatic alcohol (b112) is in the range of 5 : 1 to 2 : 1 and the average OH-functionality of the polyetherol (b1) is 2 to 8. The present invention is further directed to a rigid polyurethane foam obtained by such a method and an aromatic polyetherol (b1).

The aromatic polyetherol (b1) is obtainable by condensation of aromatic alcohol (b11) and aldehyde (b12). The aromatic alcohol (b11) comprises a mixture, consisting of at least one alkoxylation product (b111) of an aromatic alcohol having a hydroxyl value of 110 to 500 mg KOH/g and at least one alkylated aromatic alcohol (b112) which may be alkoxylated and wherein the alkyl group is bonded to the aromatic ring, the alkyl group having 4 to 18 carbon atoms, wherein the molar ratio of the alkoxylation product (b111) of the aromatic alcohol and the alkylated aromatic alcohol (b112) is in the range of 5 : 1 to 2 : 1 and the average OH-functionality of the polyetherol (b1) is 2 to 8.

The alkoxylation product (b111) of the aromatic alcohol is obtained by alkoxylation of an aromatic alcohol with an alkylene oxide. In a preferred embodiment the alkylene oxide comprises one or more compounds with 2 to 4 carbon atoms in the alkylene radical, such as tetrahydrofuran, 1,2-propylene oxide, ethylene oxide, 1,2- or 2,3-butylene oxide, are preferably used as alkylene oxides, either alone or in the form of mixtures. Preferably used are ethylene oxide and/or 1,2-propylene oxide.

The aromatic alcohol is not particularly limited and may be chosen as desired for a particular purpose or intended application. In one embodiment, the aromatic alcohol is selected from the group consisting of phenol, o-cresol, m-cresol, p-cresol, bisphenol A, bisphenol F, bisphenol S, lower alkylphenols having alkyl residues with up to 4 carbon atoms like p-tert. butylphenol, xylenols (dimethylphenols), ethylphenols, alpha and beta naphthols, resorcinol, methylresorcinols, halogenated phenols like p-chlorophenol, p-bromophenol, o-bromophenol, etc., or combinations of two or more thereof. The preferred aromatic alcohol is an aromatic alcohol wherein the aromatic ring is substituted by up to 2 organic residues having less than 2 carbon atoms each, preferably by not more than 1 organic residue having one or two carbon atoms. Most preferably the aromatic alcohol comprises unsubstituted phenol and especially preferred the aromatic alcohol is consisting of phenol.

Preferably the alkoxylation is performed in the presence of catalysts by known methods, for example by anionic polymerization. Alkali hydroxides such as sodium or potassium hydroxide or alkali alcoholates such as sodium methylate, sodium or potassium methylate or potassium isopropylate can be used as catalysts, or Lewis acids such as antimony pentachloride, boron trifluoride etherate or bleaching earth can be used as catalysts in cationic polymerization. Aminic alkoxylation catalysts such as dimethylethanolamine (DMEOA), imidazole and imidazole derivatives can also be used. Double metal cyanide compounds, so-called DMC catalysts, can also be used as catalysts for the production of the alkoxylation product (b111) of the aromatic polyol. The hydroxyl number of the alkoxylated aromatic alcohol (b111), preferably of the alkoxylated phenol, is in the range of 100 to 500 mg KOH/g, preferably 120 to 420 and more preferably 150 to 380 mg KOH/g. In a preferred embodiment the aromatic alcohol (b11) is obtained by alkoxylation with propylene oxide or a mixture of ethylene oxide and propylene wherein the molar ratio of ethylene oxide and propylene oxide is 40 : 60 to 0 : 100, preferably 20 : 80 to 0 : 100. The so obtained alkoxylated aromatic alcohol (b111) preferably comprises 60 to 100 %, more preferred 70 to 100%, and most preferably 80 to 100% and especially 100% secondary OH-groups, based on the total number of OH groups in the alkoxylated aromatic alcohol (b111).

As alkylated aromatic alcohol (b112) the same aromatic alcohols can be used as for the preparation of the alkoxylation product (b111) of the aromatic alcohol with the provision that the aromatic ring is further alkylated by at least one, preferably exactly one alkyl residue having 4 to 18, preferably 4 to 15, more preferably 6 to 12 and especially preferred 8 to 12 carbon atoms like a hexyl residue, heptyl residue, octyl residue, nonyl residue, decyl residue, undecyl residue, dodecyl residue, tridecyl residue, tetradecyl residue or pentadecyl residue. Preferably these residues are linear or branched alkyl chain and not substituted. In an especially preferred embodiment, the alkylated aromatic alcohol (b112) is selected from the group consisting of p-tertbutylphenol, octylphenol (e.g. 4-(1,1,3,3-tetramethylbutyl)phenol, 4-(n-octyl)phenol, 4-(2-ethylhexyl)phenol, etc.), nonylphenol (e.g. 4-(2-methyl-1-isopropylpentyl)phenol, 4-(1,1,3,4-tetramethylpentyl)phenol, 4-(1,2,4-trimethylhexyl)phenol, 4-(n-nonyl)phenol, etc.), decylphenol, undecylphenol, dodecylphenol and cashew nut shell liquid (CNSL) as C 15 alkylphenol or mixtures of two or more of these compounds, more preferably p-nonylphenol, p-decylphenol, p-undecylphenol, p-dodecylphenol or mixtures of two or more of these compounds and most preferably the alkylated aromatic alcohol (b112) is p-dodecylphenol or p-nonylphenol.

The alkylated aromatic alcohol (b112) may be alkoxylated, for example by conventional ethoxyaltion or propoxylation. In a preferred embodiment the alkylated aromatic alcohol (b112) is not alkoxylated. In an especially preferred embodiment the alkylated aromatic alcohol (b112) is an alkyl substituted phenol without alkoxylation.

In a preferred embodiment, the aromatic alcohol (b11) comprises less than 20 % by weight, more preferred less than 10 % and especially preferred 0% aromatic alcohols, different form the alkoxylation product (b111) of an aromatic alcohol and the alkylated aromatic alcohol (b112). The molar ratio of the alkoxylation product (b111) of an aromatic alcohol and the alkylated aromatic alcohol (b112) is in the range of 5 : 1 to 2 : 1, preferably 4 : 1 to 2.5 to 1.

Examples of suitable aldehydes (b12) for forming the aromatic polyether according to the present invention is selected from the group consisting of formaldehyde or compounds that are able to release formaldehyde in situ (trioxane, paraformaldehyde etc.), acetaldehyde, propionaldehyde, butyraldehyde, benzaldehyde, furfuryl aldehyde, glyoxal, glyoxylic acid, etc., or combinations of two or more thereof. The preferred aldehyde is formaldehyde. The amount of aldehyde added is preferably in the range of 0.7 to 1.5, preferably 0.7 to 1.2 and especially preferably 0.80 to 1.00 moles of aldehyde per mol of aromatic alcohol (b11).

The condensation of an aromatic alcohol and an aldehyde is conducted in the presence of an acid catalyst. Usually a small amount of the acid catalyst or catalysts is/are added to a miscible aromatic alcohol, followed by aldehyde addition. Suitable acid catalysts that may be employed to form the aromatic polyetherol according to the present invention include, but are not limited to, oxalic acid, p-toluene sulfonic acid, benzene sulfonic acid, methan sulfonic acid, hydrochloric acid, sulfuric acid, phenol sulfonic acid, metal salts, mixtures of two or more thereof, etc. Suitable basic catalyst are metal hydroxides, metal carbonates, amines and imidazoles. In a prefered embodiment the condensation reaction is conducted in a way that the aromatic polyetherol (b1) has an average hydroxyl functionality of 2 to 8, preferably 2.5 to 6 and especially 2.8 to 5 and an OH value of 50 to 350 mg KOH/g, preferably 60 to 250 mg KOH/g, more preferred 70 to 200 mg KOH/g, even more preferred 80 to 175 mg KOH/g and especially 90 to 150 mg KOH/g.

The aromatic alcohol (b1) may be further alkoxylated, for example ethoxylated and/or propoxylated but a further alkoxylation of the aromatic alcohol (b1) is not preferred.

A further embodiment of the present invention is a method for the preparation of a rigid polyisocyanate based foam, comprising mixing (a) polyisocyanate, (b) at least one compound having at least two hydrogen atoms reactive towards isocyanates, (c) optionally flame retardant, (d), blowing agent, (e) catalyst and (f) optionally further additives, to form a reaction mixture and reacting the reaction mixture to obtain the polyurethane based rigid foam wherein the compound reactive towards isocyanates (b) comprises the aromatic polyetherol (b1).

In the context of the invention, rigid polyisocyanate based foam is defined as a foam comprising urethane groups as a polyurethane or a polyisocyanurate, preferably a foam according to DIN 7726, which has a compressive strength according to DIN 53 421 / DIN EN ISO 604 of greater than or equal to 80 kPa, preferably greater than or equal to 150 kPa, particularly preferably greater than or equal to 180 kPa. Furthermore, the rigid polyisocyanate based foam according to DIN ISO 4590 has a closed cell density of more than 50%, preferably more than 85% and particularly preferably more than 90%.

The polyisocyanates (a) are the aliphatic, cycloaliphatic, araliphatic and preferably the aromatic polyvalent isocyanates known in the art. Such polyfunctional isocyanates are known and can be produced by methods known per se. The polyfunctional isocyanates can also be used in particular as mixtures, so that component (a) in this case contains various polyfunctional isocyanates. Polyisocyanate (a) is a polyfunctional isocyanate having two (hereafter called diisocyanates) or more than two isocyanate groups per molecule.

In particular, isocyanate (a) are selected from the group consisiting of alkylenediisocyanates with 4 to 12 carbon atoms in the alkylene radical, such as 1,12-dodecanediioscyanate, 2-ethyltetramethylenediisocyanate-1,4,2-methylpentamethylenediisocyanate-1,5, tetramethylenediisocyanate-1,4, and preferably hexamethylenediisocyanate-1,6; cycloaliphatic diisocyanates such as cyclohexane-1,3- and 1,4-diisocyanate and any mixtures of these isomers, 1-isocyanato-3,3,5-trimethyl-5-isocyanatomethylcyclohexane (IPDI), 2,4- and 2,6-hexahydrotoluene diisocyanate and the corresponding isomer mixtures, 4,4'-, 2,2'- and 2,4'-dicyclohexylmethane diisocyanate and the corresponding isomer mixtures, and preferably aromatic polyisocyanates, such as 2,4- and 2,6-toluene diisocyanate and the corresponding isomer mixtures, 4,4'-, 2,4'- and 2,2'-diphenylmethane diisocyanate and the corresponding isomer mixtures, mixtures of 4,4'- and 2,4'-diphenylmethane diisocyanates, Polyphenylpolymethylene polyisocyanates, mixtures of 4,4'-, 2,4'- and 2,2'-diphenylmethane diisocyanates and polyphenylpolymethylene polyisocyanates (crude MDI) and mixtures of crude MDI and toluene diisocyanates.

Particularly suitable are 2,2'-, 2,4'- and/or 4,4'-diphenylmethane diisocyanate (MDI), 1,5-naphthylene diisocyanate (NDI), 2,4- and/or 2,6-toluene diisocyanate (TDI), 3,3'-dimethyl diphenyl diisocyanate, 1,2-diphenylethane diisocyanate and/or p-phenylene diisocyanate (PPDI), tri-, tetra-, penta-, hexa-, hepta- and/or octamethyl diisocyanate, 2-methylpentamethylene-1,5-diisocyanate, 2-ethylbutylene-1,4-diisocyanate, pentamethylene-1,5-diisocyanate, butylene-1,4-diisocyanate, 1-isocyanato-3,3,5-trimethyl-5-isocyanatomethyl-cyclohexane (isophorone diisocyanate, IPDI), 1,4- and/or 1,3-Bis(isocyanatomethyl)cyclohexane (HXDI), 1,4-cyclohexane diisocyanate, 1-methyl-2,4- and/or -2,6-cyclohexane diisocyanate and 4,4'-, 2,4'- and/or 2,2'-dicyclohexylmethane diisocyanate.

Modified polyisocyanates, i.e. products obtained by the chemical reaction of organic polyisocyanates and containing at least two reactive isocyanate groups per molecule, are also frequently used. Particularly mentioned are polyisocyanates containing ester, urea, biuret, allophanate, carbodiimide, isocyanurate, uretdione, carbamate and/or urethane groups, often also together with non-modified polyisocyanates.

The polyisocyanates of component (a) particularly preferably contain 2,2'-MDI or 2,4'-MDI or 4,4'-MDI or mixtures of at least two of these isocyanates (also referred to as monomeric diphenylmethane or MMDI) or oligomeric MDI consisting of higher-core homologues of the MDI which have at least 3 aromatic nuclei and a functionality of at least 3, or mixtures of two or more of the above-mentioned diphenylmethane diisocyanates, or crude MDI obtained in the preparation of MDI, or preferably mixtures of at least one oligomer of the MDI and at least one of the above-mentioned low molecular weight MDI derivatives 2,2'-MDI, 2,4'-MDI or 4,4'-MDI (also referred to as polymeric MDI). Usually the isomers and homologues of the MDI are obtained by distillation of crude MDI.

Polymeric MDI preferably contains one or more polynuclear condensation products of the MDI with a functionality of more than 2, in particular 3 or 4 or 5, in addition to dinuclear MDI (MMDI). Polymeric MDI is known and is often referred to as polyphenyl polymethylene polyisocyanate.

The average functionality of a polyisocyanate containing polymeric MDI may vary in the range from about 2.2 to about 4, in particular from 2.4 to 3.8 and in particular from 2.6 to 3.0. Such a mixture of MDI-based polyfunctional isocyanates having different functionalities is in particular the crude MDI obtained in the production of MDI as an intermediate.

Polyfunctional isocyanates or mixtures of several polyfunctional isocyanates based on MDI are known and are commercially available from BASF Polyurethanes GmbH under the trade name Lupranat^{®} M20 or Lupranat^{®} M50.

Component (a) preferably contains at least 70, particularly preferably at least 90 and in particular 100 wt.%, based on the total weight of components (a), of one or more isocyanates selected from the group consisting of 2,2'-MDI, 2,4'-MDI, 4,4'-MDI and oligomers of the MDI. The content of oligomeric MDI is preferably at least 20% by weight, particularly preferably greater than 30% to less than 80% by weight, based on the total weight of component (a).

The viscosity of the component (a) used can vary over a wide range. Component (a) preferably has a viscosity of 100 to 3000 mPa^{∗}s, especially preferred from 100 to 1000 mPa^{∗}s, especially preferred from 100 to 600 mPa^{∗}s, more especially from 200 to 600 mPa^{∗}s and especially from 400 to 600 mPa^{∗}s at 25 °C.

In a preferred embodiment the at least one compound having at least two hydrogen atoms reactive towards isocyanates (b) comprises the aromatic polyetherpolyol (b1) and at least one compound selected from the group consisting of an aromatic polyesterpolyol (b2) and a polyetherpolyol (b3) different from polyether (b1).

Suitable aromatic polyester polyols (b2) can preferably be produced from aromatic dicarboxylic acids or mixtures of aromatic and aliphatic dicarboxylic acids, especially preferably exclusively from aromatic dicarboxylic acids and polyhydric alcohols. Instead of free dicarboxylic acids, the corresponding dicarboxylic acid derivatives, such as dicarboxylic acid esters of alcohols with 1 to 4 carbon atoms or dicarboxylic acid anhydrides, can also be used.

As aromatic dicarboxylic acids or as aromatic dicarboxylic acid derivatives preferably phthalic acid, phthalic anhydride, terephthalic acid and/or isophthalic acid are used in the mixture or alone, preferably phthalic acid, phthalic anhydride and terephthalic acid are used. Especially preferred is the use of terephthalic acid or dimethyl terephthalate, especially terephthalic acid. Aliphatic dicarboxylic acids can be used in a minor amount together with aromatic dicarboxylic acids in the mixture. Examples of aliphatic dicarboxylic acids are succinic acid, glutaric acid, adipic acid, cork acid, azelaic acid, sebacic acid, decandicarboxylic acid, maleic acid and fumaric acid.

Examples of polyvalent alcohols are: Ethanediol, diethylene glycol, 1,2- or 1,3-propanediol, dipropylene glycol, 1,4-butanediol, 1,5-pentanediol, 1,6-hexanediol, 1,10-decanediol, glycerol, trimethylolpropane and pentaerythritol or their alkoxylates. Preferably used are ethylene glycol, diethylene glycol, propylene glycol, glycerol, trimethylolpropane or their alkoxylates or mixtures of at least two of the mentioned polyols.

In a preferred embodiment of the invention, a polyether polyol which is a reaction product of glycerol and/or trimethylolpropane with ethylene oxide and/or propylene oxide, preferably with ethylene oxide, is also used as a polyhydric alcohol, the OH number of the polyether polyol preferably being between 500 and 750 mg KOH/g.

In addition to aromatic dicarboxylic acids or their derivatives and polyhydric alcohols, biobased starting materials and/or their derivatives are also suitable for the production of polyester polyols (b2), e.g. faty acids or fatty acid derivatives as Castor oil, polyhydroxy fatty acids, ricinoleic acid, hydroxyl-modified oils, grape seed oil, black cumbel oil, pumpkin seed oil, borage seed oil, soybean oil, wheat seed oil, Rapeseed oil, sunflower seed oil, peanut oil, apricot kernel oil, pistachio oil, almond oil, olive oil, macadamia nut oil, avocado oil, sea buckthorn oil, sesame oil, hemp oil, hazelnut oil, primrose oil, wild rose oil, safflower oil, walnut oil, fatty acids, hydroxyl modified fatty acids and fatty acid esters based on myristoleic acid, palmitoleic acid, oleic acid, vaccenoic acid, petroselinic acid, gadoleinic acid, erucic acid, nervonic acid, linoleic acid, o,- and *γ* -linolenic acid, stearidonic acid, arachidonic acid, timnodonic acid, clupanodonic acid and cervonic acid.

A preferred form of the present invention is the fatty acid or the fatty acid derivative oleic acid, biodiesel, soya oil, rapeseed oil or tallow, particularly preferred is oleic acid or biodiesel and in particular oleic acid. The fatty acid or fatty acid derivative improves, among other things, the blowing agent solubility in the production of polyurethane rigid foams.

In a preferred embodiment the aromatic polyesterpolyol (b2) is obtainable by esterification of dicarboxylic acid composition comprising one or more aromatic dicarboxylic acids or derivatives thereof, one or more fatty acids or fatty acid derivatives, one or more aliphatic or cycloaliphatic diols having 2 to 18 carbon atoms or alkoxylates thereof and a polyol having an average functionality of more than 1.7 and more preferably more than 2.

In order to prepare the polyester polyols (b2), the aliphatic and aromatic polycarboxylic acids and/or derivatives and polyhydric alcohols may be polycondensed, catalyst-free or preferably in the presence of esterification catalysts, expediently in an atmosphere of inert gas such as nitrogen in the melt at temperatures of 150 to 280°C, preferably 180 to 260°C, optionally under reduced pressure up to the desired acid number, which is advantageously less than 10, preferably less than 2. According to a preferred design, the esterification mixture is polycondensed at the above-mentioned temperatures up to an acid number of 80 to 20, preferably 40 to 20, under normal pressure and subsequently under a pressure of less than 500 mbar, preferably 40 to 400 mbar. For example, iron, cadmium, cobalt, lead, zinc, antimony, magnesium, titanium and tin catalysts in the form of metals, metal oxides or metal salts may be used as esterification catalysts. However, polycondensation can also be carried out in the liquid phase in the presence of diluents and/or entraining agents such as benzene, toluene, xylene or chlorobenzene for the azeotropic distillation of condensation water.

To prepare the polyester polyols (b2), the organic polycarboxylic acids and/or derivatives and polyhydric alcohols are advantageously polycondensed in a molar ratio of 1 : 1 to 2.2, preferably 1 : 1.05 to 2.1 and particularly preferably 1 : 1.1 to 2.0.

Preferably the polyester polyol (b2) has a number-weighted average functionality of greater than 1.7, preferably greater than 2, particularly preferably greater than 2.2 and in particular greater than 2.3. The number-weighted average functionality is smaller than 8, preferably smaller than 6 and especially smaller than 4. In an especially preferred embodiment the average functionality is in the range of 2-2.5, which leads to a higher crosslinking density of the polyurethane produced thereby and thus to better mechanical properties of the polyurethane foam.

The polyester polyols (b2) obtained generally have a number average molecular weight of 200 to 2000 g/mol, preferably 300 to 1000 g/mol and in particular 400 to 700 g/mol. The OH number of polyester polyols (b2) is preferably 100 to 800, especially preferred from 150 to 500 and especially from 200 to 400 and the most preferably from 200 to 350 mg KOH/g.

Preferably the polyetherpolyol (b3) is obtained by alkoxylation of an aliphatic starting molecule or a mixture of aliphatic starting molecules. Preferably the polyetherols (b3) are obtained in the presence of catalysts by known methods, for example by anionic polymerization of alkylene oxides with addition of at least one starter molecule containing 2 to 8, preferably 2 to 6, reactive hydrogen atoms bonded, the average functionality of the starter molecules being in a preferred embodiment at least 3. The nominal functionality of the polyetherols preferably is therefore at least 3, more preferably 3 to 6, and refers to the functionality of the starter molecules. If mixtures of starter molecules with different functionality are used, fractional functionalities can be obtained. Influences on functionality, for example by side reactions, are not considered in the nominal functionality. Alkali hydroxides such as sodium or potassium hydroxide or alkali alcoholates such as sodium methylate, sodium or potassium methylate or potassium isopropylate can be used as catalysts, or Lewis acids such as antimony pentachloride, boron trifluoride etherate or bleaching earth can be used as catalysts in cationic polymerization. Aminic alkoxylation catalysts such as dimethylethanolamine (DMEOA), imidazole and imidazole derivatives can also be used. Double metal cyanide compounds, so-called DMC catalysts, can also be used as catalysts for the production of the polyetherpolyol (b3).

One or more compounds with 2 to 4 carbon atoms in the alkylene radical, such as tetrahydrofuran, 1,2-propylene oxide, ethylene oxide, 1,2- or 2,3-butylene oxide, are preferably used as alkylene oxides, either alone or in the form of mixtures. Preferably used are ethylene oxide and/or 1,2-propylene oxide, in particular exclusively 1,2-propylene oxide.

The starter molecules are compounds containing hydroxyl groups or amine groups, such as ethylene glycol, diethylene glycol, glycerol, trimethylolpropane, pentaerythritol, sugar derivatives such as sucrose, hexite derivatives such as sorbitol, methylamine, ethylamine, isopropylamine and butylamine, benzylamine, aniline, toluidine, toluenediamine (TDA), naphthylamine, ethylenediamine, diethylenetriamine, 4,4'-methylenedianiline, 1,3,-propanediamine, 1,6-hexanediamine, ethanolamine, diethanolamine, triethanolamine, and other two or more valent alcohols or one or more valent amines. Since these highly functional compounds are present in solid form under the usual reaction conditions of alkoxylation, it is common practice to al-alkoxylate them together with co-initiators. Suitable co-initiators are e.g. water, polyfunctional lower alcohols, e.g. glycerine, trimethylolpropane, pentaerythritol, diethylene glycol, ethylene glycol, propylene glycol and their homologues. Further co-initiators are for example: organic fatty acids, fatty acid monoesters or fatty acid methyl esters such as oleic acid, stearic acid, oleic acid methyl ester, stearic acid methyl ester or biodiesel, which serve to improve the blowing agent solubility in the production of rigid polyurethane foams. In a preferred embodiment the average functionality of the starter molecules is at least 3.

Preferred starter molecules for the production of polyether polyols (b3) are sorbitol, saccharose, ethylenediamine, TDA, trimethylolpropane, pentaerythritol, glycerol, biodiesel and diethylene glycol. Particularly preferred starter molecules are sucrose, glycerol, bio-diesel, TDA and ethylenediamine, especially sucrose, ethylenediamine and/or toluenediamine.

The polyether polyols (b3) preferably have a functionality of 3 to 6 and in particular 3.5 to 5.5 and number average molecular weights of preferably 150 to 1200, in particular 200 to 800 and in particular 250 to 600. The OH number of polyether polyols of the components (b1) is preferably from 1200 to 100, preferably from 1000 to 200 and in particular from 800 to 350 mg and the most preferable from 600-350 KOH/g. In a preferred embodiment compound (b) comprises aromatic polyesterpolyol (b2) and polyether polyols (b3).

Component (b) may also contain chain extenders and/or cross-linking agents (b4), for example to modify mechanical properties such as hardness. Diols and/or triols and amino alcohols with molecular weights of less than 150 g/mol, preferably from 60 to 130 g/mol, are used as chain extenders and/or crosslinking agents. Examples are aliphatic, cycloaliphatic and/or araliphatic diols with 2 to 8, preferably 2 to 6 carbon atoms, such as ethylene glycol, 1,2-propylene glycol, diethylene glycol, dipropylenglycol, 1,3-propanediol, 1,4-butanediol, 1,6-hexanediol, o-, m-, p-dihydroxycyclohexane, bis-(2-hydroxyethyl)-hydroquinone. Also considered are aliphatic and cycloaliphatic triols such as glycerol, trimethylolpropane and 1,2,4- and 1,3,5-trihydroxycyclohexane.

If chain extenders, crosslinking agents or mixtures thereof are used for the production of the rigid polyurethane foams, these are purposefully used in an amount of from 0 to 15% by weight, preferably from 0 to 5% by weight, based on the total weight of component (b). Component (b) preferably contains less than 2% by weight and particularly preferably less than 1% by weight and in particular no chain extender and/or crosslinking agent (b4).

In a particularly advantageous embodiment of the present invention, component (b) consists of a mixture of 1 to 80 parts by weight, preferably 5 to 70, in more preferable 10 to 60, even more preferable 10 to 40, and most preferable 10 to 30 parts by weight, of the aromatic polyetherol (b1), 0 to 50 parts by weight, preferably 5 to 40 parts by weight, in particular 10 to 30 parts by weight of the aromatic polyester polyol (b2), 10 to 70 parts by weight, in particular 25 to 60 parts by weight, of the polyether polyol (b3) and 0 to 15 parts by weight of chain extenders and/or crosslinking agents (b4), based on the total weight of component (b).

The component (b) used in accordance with the invention has a medium hydroxyl number of 200 to 600 mg KOH/g, in particular 250 to 550 and more particular 300 to 550 mg KOH/g. The hydroxyl value is determined in accordance with DIN 53240.

Flame retardants (c) can generally be the state of the art flame retardants. Suitable flame retardants include brominated esters, brominated ethers or brominated alcohols such as dibromo-neopentyl alcohol, tribromine neopentyl alcohol and PHT-4 diol, as well as chlorinated phosphates such as tris-(2-chloroethyl)-phosphate, tris-(2-chloroisopropyl)-phosphate (TCPP), Tris-(1,3-dichloropropyl)-phosphate, trikresylphosphate, 10 tris-(2,3-dibromopropyl)-phosphate, tetrakis-(2-chloroethyl)-ethylene diphosphate, dimethyl methane phosphonate, diethanol amino-methyl phosphonic acid diethylester, as well as commercial halogen-containing flame retardant polyols. As further phosphates or phosphonates diethylethan phosphonate (DEEP), triethylphosphate (TEP), dimethyl-propylphosphonate (DMPP), diphenylkresylphosphate (DPK) can be used as liquid flame retardants.

In addition to the flame retardants already mentioned, inorganic or organic flame retardants such as red phosphorus, red phosphorus-containing finishing agents, aluminium oxide hydrate, antimony trioxide, arsenic oxide, ammonium polyphosphate and calcium sulphate, expanded graphite or cyanuric acid derivatives such as melamine, or mixtures of at least two flame retardants, e.g. ammonium polyphosphates and melamine, and, where appropriate, maize starch or ammonium polyphosphate, melamine, expanded graphite and, where appropriate, aromatic polyesters may be used to make the polyurethane rigid foams flame retardant.

Preference shall be given to flame retardants which are liquid at room temperature. Particularly preferred are TCPP, TEP, DEEP, DMPP, DPK, brominated ethers and tribromoneopentyl alcohol, especially TCPP, TEP and tribromoneopentyl alcohol and especially TCPP.

In a preferred embodiment flame retardant is used. In general, the proportion of flame retardant (c) is 10 to 55 wt.%, preferably 20 to 50 wt.%, especially 25 to 35 wt.%, based on the sum of components (b) to (f).

According to the invention at least one blowing agent (d) is used. Preferably water, formic acid and mixtures thereof belong to the blowing agents used for the production of rigid polyurethane foams. These react with isocyanate groups to form carbon dioxide and, in the case of formic acid, carbon dioxide and carbon monoxide. Since these blowing agents release the gas through a chemical reaction with the isocyanate groups, they are referred to as chemical blowing agents. In a preferred embodiment the chemical blowing agent comprises formic acid. Preferably water, formic acid-water mixtures or formic acid are used as chemical blowing agents, especially preferred chemical blowing agents are water or formic acid-water mixtures.

In addition, physical propellants can be used. Especially suitable are liquids which are inert to the isocyanates used and have boiling points below 100 °C, preferably below 50 °C at atmospheric pressure, so that they evaporate under the influence of the exothermic polyaddition reaction. Examples of such preferably used liquids are aliphatic or cycloaliphatic hydrocarbon compounds with 4 to 8 carbon atoms, such as heptane, hexane and iso-pentane, preferably technical mixtures of n- and iso-pentanes, n- and iso-butane and propane, cycloalkanes, such as cyclopentane and/or cyclohexane, ethers, such as furan, dimethyl ether and diethyl ether, Ketones, such as acetone and methyl ethyl ketone, alkyl carboxylates, such as methyl formate, dimethyl oxalate and ethyl acetate and halogenated hydrocarbons, such as methylene chloride, Dichloromonofluoromethane, difluoromethane, trifluoromethane, difluoro-rethane, tetrafluoroethane, chlorodifluoroethane, 1,1-dichloro-2,2,2-trifluoroethane, 2,2-dichloro-2-fluoroethane and heptafluoropropane. Mixtures of these low-boiling liquids with one another and/or with other substituted or unsubstituted hydrocarbons may also be used as physical blowing agents.

As physical blowing agent also unsaturated fluorinated hydrocarbons (HFO) may be used. In a preferred embodiment such HFO's are composed of 2 to 5, preferably 3 or 4 carbon atoms, at least one hydrogen atom and at least one fluorine and/or chlorine atom, the HFO containing at least one carbon-carbon double bond. Suitable HFO's according to the present invention comprise trifluoropropenes and tetrafluoropropenes such as (HFO-1234), pentafluoropropenes such as (HFO-1225), chlorotrifluoropropenes such as (HFO-1233), chlorodifluoropropenes and chlorotetrafluoropropenes and mixtures of one or more of these components. Particularly preferred are tetrafluoropropenes, pentafluoropropenes and chlorotrifluoropropenes, where the unsaturated terminal carbon atom carries more than one chlorine or fluorine substituent. Examples are 1,3,3,3-tetrafluoropropene (HFO-1234ze); 1,1,3,3-tetrafluoropropene; 1,2,3,3,3-pentafluoropropene (HFO-1225ye); 1,1,1-trifluoropropene; 1,1,1,3,3-pentafluoropropene (HFO-1225zc); 1,1,1,3,3,3-hexafluorobut-2-ene, 1,1,2,3,3-pentafluoropropene (HFO-1225yc); 1,1,1,2,3-pentafluoropropene (HFO-1225yez); 1-chloro-3,3,3-trifluoropropene (HCFO-1233zd); 1,1,1,4,4,4-hexafluorobut-2-ene or mixtures of two or more thereof.

Particularly preferred HFO's are hydrofluoroolefins selected from the group consisting of trans-1-chloro-3,3,3-trifluoropropene (HCFO-1233zd(E)), cis-1-chloro-3,3,3-trifluoropropene (HCFO-1233zd(Z)), trans-1,1,1,4,4,4-hexaf!uorobut-2-ene (HFO-1336mzz(E)), cis-1,1,1,4,4,4-hexafluorobut-2-ene (HFO-1336mzz(Z)), trans-1,3,3,3-tetrafluoroprop-1-ene (HFO-1234ze(E)), cis-1,3,3,3-tetrafluoroprop-1-ene (HFO-1234ze(Z)) or mixtures of one or more components thereof.

The chemical blowing agents can be used alone, i.e. without the addition of physical blowing agents, or together with physical blowing agents. The chemical blowing agents are preferably used together with physical blowing agents. In a preferred embodiment the blowing agents (d) comprise aliphatic or cycloaliphatic hydrocarbons with 4 to 8 carbon atoms, especially isomers of pentane, such as isopentane, n-pentane or cyclopentane, or mixtures of isomers of pentane as physical blowing agents. More preferred, the blowing agents comprise water or formic acid-water mixtures together with pentane isomers or mixtures of pentane isomers. Alternatively, in case that flamabillity should be further reduced, the blowing agent comprises HFO, optionally together with chemical blowing agents.

The quantity of blowing agent or blowing agent mixture used in general is 1 to 30% by weight, preferably 1.5 to 20% by weight, particularly preferably 2.0 to 15% by weight, based in each case on the sum of components (b) to (f). If water or a formic acid/water mixture is used as propellant, it is preferably added to component (b) in an amount of 0.2 to 6% by weight, based on the weight of component (b). The addition of water, or the formic acid/water mixture, may be made in combination with the use of the other blowing agents described. Water or a formic acid-water mixture in combination with pentane isomers or mixtures of pentane isomers is preferred.

In particular, compounds are used as catalysts (e) for the production of polyurethane foams which greatly accelerate the reaction of the compounds of components (b) to (f) containing reactive hydrogen atoms, in particular hydroxyl groups, with the polyisocyanates (a).

Basic polyurethane catalysts can be used, such as tertiary amines such as triethylamine, tributylamine, dimethylbenzylamine, dicyclo-hexylmethylamine, dimethylcyclohexylamine, N,N,N',N'-tetramethyldiaminodiethyl ether, bis(dimethylaminopropyl)urea, N-methyl- or N-ethylmorpholine, N-cyclohexyl morpholine, N,N,N',N'-tetramethyl ethylenediamine, N,N,N,N-tetramethyl butanediamine, N,N,N,N-tetramethyl hexanediamine-1,6, pentamethyldiethylenetriamine, bis(2-dimethyl¬aminoethyl)ether, dimethylpiperazine, N-dimethyl-aminoethylpiperidine, 1,2-dimethyl¬imidazole, 1-azabicyclo-(2,2,0)octane, 1,4-diazabicyclo.(2,2,2).octane (dabco) and alkanolamine compounds such as triethanolamine, triisopropanolamine, N-methyl- and N-ethyl diethanolamine, dimethylaminoethanol, 2-(N,N-dimethylamino¬ethoxy)ethanol, N,N',N"-tris-(dialkylaminoalkyl)hexahydrotriazines, e.g. N,N',N"-Tris-(dimethyl¬amino¬propyl)-s-hexahydrotriazine, and triethylenediamine. However, metal salts such as iron(II) chloride, zinc chloride, lead octoate and preferably tin salts such as tin dioctoate, tin diethyl hexoate and dibutyltin dilaurate as well as mixtures of tertiary amines and organic tin salts are also suitable.

Further possible catalysts are: amidines such as 2,3-dimethyl-3,4,5,6-tetrahydro¬pyrimidine, tetraalkylammonium hydroxides such as tetramethylammonium hydroxide, alkali hydroxides such as sodium hydroxide and alkali alcoholates such as sodium methylate and potassium isopropylate, alkali carboxylates as well as alkali salts of long-chain fatty acids with 10 to 20 carbon atoms and optionally side OH groups.

Furthermore, amines which can be incorporated can be considered as catalysts, i.e. preferably amines with an OH, NH or NH2 function, such as ethylenediamine, triethanolamine, diethanolamine, ethanolamine and dimethylethanolamine.

Preferably 0.001 to 10 parts by weight of catalyst or catalyst combination, based on 100 parts by weight of component (b), are used. It is also possible to run the reactions without catalysis. In this case, the catalytic activity of polyols started with amines is usually used.

If a polyisocyanate excess is used for foaming, catalysts for the trimerization reaction of the excess NCO groups with each other can also be considered: Catalysts forming isocyanurate groups, for example ammonium ion or alkali metal salts, especially ammonium or alkali metal carboxylates, in particular potassium acetate and solutions thereof, alone or in combination with tertiary amines. The isocyanurate formation leads to flame-retardant PIR foams, which are preferably used in technical rigid foams, for example in building materials as insulation boards or sandwich elements.

Other auxiliaries and/or additives (f) may be added to the reaction mixture for the manufacture of the polyurethane foams in accordance with the invention. Examples include surface-active substances, foam stabilizers, cell regulators, fillers, light stabilizers, dyes, pigments, hydrolysis inhibitors, fungistatic and bacteriostatic substances.

As surface-active substances, e.g. compounds can be considered which support the homogenization of the starting materials and are also suitable to regulate the cell structure of the plastics. Examples are emulsifiers such as sodium salts of ricinus oil sulfates or fatty acids as well as salts of fatty acids with amines, e.g. oleic diethylamine, stearic diethanolamine, ricinolic diethanolamine, salts of sulfonic acids, e.g. alkali or ammonium salts of dodecylbenzene or dinaphthylmethanedisulfonic acid and ricinoleic acid; foam stabilizers such as siloxanoxalkylene copolymers and other organopolysiloxanes, oxethylated alkylphenols, oxethylated fatty alcohols, paraffin oils, ricinoleic oil or ricinoleic acid. Ricinoleic acid esters, Turkish red oil and peanut oil, and cell regulators such as paraffins, fatty alcohols and dimethylpolysiloxanes. Oligomeric acrylates with polyoxyalkylene and fluoroalkane residues as side groups are also suitable for improving the emulsifying effect, the cell structure and/or stabilisation of the foam. The surface-active substances are usually applied in quantities of 0.01 to 10 parts by weight, based on 100 parts by weight of component (b).

In a preferred embodiment one or more foam stabilizers are added. Common foam stabilizers, such as silicone-based foam stabilizers such as siloxaneoxalkylene copolymers and other organopolysiloxanes and/or oxethylated alkylphenols and/or oxethylated fatty alcohols, can be used as foam stabilizers. Commonly used silicon stabilizers are polysiloxane-polyoxyalkylene-copolymers or polyethersiloxanes. Such siloxane based stabilizers are for example described in "Polyurethane Handbook", 2nd Edition, Hanser Publishers 1993, Chapter 3.4.4.2.

Fillers, in particular reinforcing fillers, are the usual organic and inorganic fillers known per se. Examples include: inorganic fillers such as silicate minerals, for example layer silicates such as antigorite, serpentine, hornblends, amphibole, chrysotile and talcum, metal oxides such as kaolin, aluminium oxides, titanium oxides and iron oxides, metal salts such as chalk, barite and inorganic pigments such as cadmium sulphide and zinc sulphide, as well as glass and others. Preferably used are kaolin (China clay), aluminium silicate and coprecipitates of barium sulphate and aluminium silicate as well as natural and synthetic fibrous minerals such as wollastonite, metal and especially glass fibres of various lengths, which may be sized if necessary. Organic fillers may include, for example, carbon, melamine, collophonium, cyclopentadienyl resins and graft polymers as well as cellulose fibres, polyamide, polyacrylonitrile, polyurethane and polyester fibres based on aromatic and/or aliphatic dicarboxylic acid esters and, in particular, carbon fibres.

The inorganic and organic fillers can be used individually or as mixtures and are advantageously added to the reaction mixture in amounts of 0.5 to 50 wt.%, preferably 1 to 40 wt.%, based on the weight of components (a) to (f), but the content of mats, nonwovens and fabrics of natural and synthetic fibres may reach values of up to 80 wt.%, based on the weight of components (a) to (f).

Further information on the above-mentioned common auxiliaries and additives (f) can be found in the technical literature, for example the monograph by J.H. Saunders and K.C. Frisch "High Polymers" Vol. XVI, Polyurethanes, Parts 1 and 2, Interscience Publishers 1962 and 1964, or the "Polyurethane Handbook", Hanser Publishers, Munich, Vienna, 2nd edition, 1993.

For the production of rigid polyisocyanate based foams according to the invention the polyisocyanates (a) and the components (b), optionally (c), (d), (e) and optionally (f) are preferably mixed in such amounts that the isocyanate index is in a range between 90 and 160, more preferably between 95 and 140, and especially preferably between 105 and 130. In another preferred embodiment the isocyanate index can be in the range of more than 160 to 600, preferably more than 170 to 500, more preferable more than 180 to 450, even more preferable more than 190 to 400 or more than 200 to 350 and most preferred more than 250 to 350. The isocyanate index is the molar ratio of isocyanate groups to groups reactive with isocyanate groups multiplied by 100. In a preferred embodiment components (b), optionally (c), (d), (e) and optionally (f) are mixed to form a polyol component before mixing with the isocyanates (a). In the context of the present invention "reaction mixture" is to be understood as mixture wherein the conversion of the isocyanate groups is less than 90 % based on the theoretical conversion with isocyanate reactive groups of the mixture.

The starting components are mixed at a temperature of 15 to 90 °C, preferably 20 to 60 °C, and in particular 20 to 45 °C. The reaction mixture can be obtained by mixing in high or low pressure dosing machines and introducing the reaction mixture into closed molds. According to this technology, discontinuous sandwich elements, for example, are produced.

The rigid foams according to the invention are preferably produced on continuously operating double belt lines. Here the polyol and isocyanate components are dosed with a highpressure machine and mixed in a mixing head. Catalysts and/or blowing agents can be dosed into the polyol mixture beforehand using separate pumps. The reaction mixture is continuously applied to the lower layer. The lower lower layer with the reaction mixture and the upper top layer enter the double belt in which the reaction mixture foams and hardens. After leaving the double belt, the endless strand is cut into the desired dimensions. In this way, sandwich elements with metallic cover layers or insulation elements with flexible cover layers can be produced.

As lower and upper cover layers, which can be the same or different, flexible or rigid cover layers usually used in the double belt method can be used. These include metal face sheets such as aluminum or steel, bitumen face sheets, paper, nonwovens, plastic sheets such as polystyrene, plastic films such as polyethylene films or wood face sheets. The top layers can also be coated, for example with a conventional lacquer.

A further embodiment of the present invention is rigid polyisocyanate based foam, obtainable according to a method according to the invention.

Rigid polyisocyanate based foams produced according to the invention have a density of 0,02 to 0,75 g/cm³, preferably 0,025 to 0,24 g/cm³ and in particular 0,03 to 0,1 g/cm³. They are particularly suitable as insulation material in the construction or cooling sector, e.g. as intermediate layer for sandwich elements.

The rigid polyisocyanate based foams according to the invention are characterized by a particularly high flame retardancy and therefore allow the use of reduced quantities of flame retardants, in particular a reduced quantity of toxic halogenated flame retardants. Preferably, the rigid foams according to the invention have a flame height of less than 15 cm according to a test according to EN-ISO 11925-2.

Furthermore, the PUR rigid foams in accordance with the invention meet all necessary requirements for good processability and end product properties even at low mould temperatures of less than 55 °C and without additional adhesion promoter. Especially polyisocyanate based foams according to the invention show fast foam curing, good foam adhesion on metallic surface layers, few defects on the foam surface, good compressive strength and good thermal insulation properties.

The following examples will illustrate this invention:

### Examples

The following compounds have been used:

| | |
|---|---|
| Polyol A: | Alkoxylation product of saccharose, pentaerythritol and diethylene glycol with propylene oxide having a hydroxyl number of 400 mg KOH/g, and an average OH-functionality of 3.9. |
| Polyol B: | Alkoxylation product of sorbitol with propylene oxide having a hydroxyl number of 490 mg KOH/g, and an average OH-functionality of 5. |
| Polyol C: | Alkoxylation product of glycerol with propylene oxide having a hydroxyl number of 400 mg KOH/g, and an average OH-functionality of 3. |
| Polyol D: | Alkoxylation product of saccharose and glycerol with propylene oxide having a hydroxyl number of 490 mg KOH/g, and an average OH-functionality of 4.4. |
| Polyol E: | Polycondensation product of terephthalic acid, oleic acid, glycerol and diethylene glycol having a hydroxyl number of 242 mg KOH/g, and an average OH-functionality of 2.5. |
| Flameretardant 1 (FR1): | tris-2-Chlorisopropylphosphate |
| Flameretardant 2 (FR2): | triethylphosphate |
| Flameretardant 3 (FR3): | tribromneopentylglykol |
| Flameretardant 4 (FR4): | Ixol^{®} B 251, flameretardant obtainable from Solvay |
| Stabi: | Tegostab^{®} B 8490, stabilizer obtainable from Evonik |
| Catalyst 1: | N,N-Dimethylbenzylamin, |
| Catalyst 2: | Dabco^{®} TMR 2, catalyst, obtainable from Air Products |
| Catalyst 3: | tetramethylhexanediamine |
| Blowing agent 1: | n-Pentane |
| Blowing agent 2: | 85 % by weight aqueous solution of formic acid |
| Isocyanate A: | Polymer-MDI having an NCO-content of 31.5 wt.-% (Lupranat^{®} M20 obtainable from BASF SE) |
| Aromatic polyetherol 1: | Aromatic polyether polyol obtained by condensation of Ph-O-(C₃H₆O)₃-OH and formaldehyde, OH value 165 mg KOH/g (comparative; synthesis see below). |
| Aromatic polyetherol 2: | Aromatic polyether polyol obtained by condensation of Ph-O-(C₃H₆O)₃-OH and Ph-C₁₂ (molar ratio 3:1) and formaldehyde, OH value 136 mg KOH/g (inventive; synthesis see below) |
| Aromatic polyetherol 3: | commercially available polyol Cardolite^{®} NX-9001 (produced by Cardolite Corporation) is a novolac polyol based on renewable, cashew nutshell liquid (CNSL), obtainable by condensation of cardanol and formaldehyde and subsequent prpoxylation, OH value 175 mg KOH/g and functionality 4.4 (comparative example). |
| Aromatic polyetherol 4: | Aromatic polyether polyol obtained by condensation of Ph-O-(C₃H₆O)₃-OH and Ph-C₁₂ (molar ratio 1:1) and formaldehyde, OH value 89 mg KOH/g (comparative; synthesis see below) |

### Synthesis

### Synthesis of aromatic polyetherol 1:

478 g Ph-O-(C₃H₆O)₃-OH, 50.9 g paraformaldehyde and 11.9 g methanesulfonic acid (100 %) were placed in a three-necked round bottom flask. The apparatus was flushed with nitrogen and the mixture heated to 120 °C. After 6 hours the warm mixture was transferred in a one neck round bottom flask and the purification process with magnesia silicates [Macrosorb F60 from PQ Corporation]) was started. The OH number after purification process was 165 mg KOH/g and acid number < 0,1 mg KOH/g.

### Synthesis of aromatic polyetherol 2:

354.7 g Ph-O-(C₃H₆O)₃-OH, 107.6 g dodecylphenol (Ph-C₁₂), 46.6 g paraformaldehyde and 11.4 g methanesulfonic acid (100 %) were placed in a three-necked round bottom flask. The apparatus was flushed with nitrogen and the mixture heated to 120 °C. After 6 hours the warm mixture was transferred in a one neck round bottom flask and the purification process with magnesia silicates [Macrosorb F60 from PQ Corporation]) was started. The OH number after purification process was 136 mg KOH/g and acid number < 0,1 mg KOH/g.

### Synthesis of aromatic polyetherol 4:

229.7 g Ph-O-(C₃H₆O)₃-OH, 225.7 g dodecylphenol (Ph-C₁₂), 48.9 g paraformaldehyde and 7.7 g methanesulfonic acid (100 %) were placed in a three-necked round bottom flask. The apparatus was flushed with nitrogen and the mixture heated to 120 °C. After 6 hours the warm mixture was transferred in a one neck round bottom flask and the purification process with magnesia silicates [Macrosorb F60 from PQ Corporation]) was started. The OH number after purification process was 89 mg KOH/g and acid number < 0,1 mg KOH/g.

### Synthesis of Ph-O-(C₃H₆O)₃-OH monomer used for the preparation of aromatic polyetherols 1, 2 and 4

2590.5 g of 1-Phenoxy-2-propanol (CAS 770-35-4) and 28.8 g of KOH (50% wt aqueous solution) were added to a 5-liter pressure reactor provided with stirrer, jacket heating and cooling, metering facilities for alkylene oxides and also facilities for making inert with nitrogen. Then the reactor was made inert three times with nitrogen and heated to 120°C. The reaction mixture was dried under vacuum (15 mbar) for 2 hours. 1977.3 g of propylene oxide were added over 4 hours and 4 minutes. The post-reaction proceeded for 3 hours at 120°C. The mixture was stripped with nitrogen for 20 minutes and then cooled down to 40°C. The sample was worked-up using 5% of Ambosol (CAS 1343-88-0 from PQ Corporation). 4231 g of a yellowish oil having the OH number of 195 mg KOH/g.

The following methods were used to determine the properties of the polyols:
Hydroxyl number was determined according to phthalic acid method DIN 53240 (1971-12) and is given in mg KOH/g.

Acid number was determined according to DIN EN ISO 2114 and is given in mg KOH/g.

### Properties

Method to measure pentane solubility:
To measure pentane solubility 10g of a polyol sample is added into a 40 ml plastic vessel having a screw cap. In steps of 0.1 g blowing agent is added while stirring until the solution becomes turbid. The pentane solubility is given in parts by weight of blowing agent per 100 g of polyol. The amount of blowing agent is shown were the mixture is clear for the last time.

| Solubility | Aromatic polyetherol 1 | Aromatic polyetherol 2 | Aromatic polyetherol 3 |
|---|---|---|---|
| n-Pentane (g/100 g polyol) | 7 | 27 | 100 |
| c-pentane (g/100 g polyol) | 27 | 100 | 100 |

The pentane solubility of Aromatic polyetherol 2 is significantly better relative to aromatic polyetherol 1 and similar to aromatic polyetherol 3 (Cardanol based polyol). This is important for the surface quality of the foams and adhesion to metal surfaces (sandwich panels).

Stability of polyol components containing aromatic polyetherols and n-pentane as a blowing agent was investigated at RT and 5°C using polyol-component blends (in weight parts) shown in Table 1.

| | Comp. Example 1 | Example 1 | Comp. Example 2 | Comp. Example 5 | Comp. Example 3 | Example 2 | Comp. Example 4 | Comp. Example 6 |
|---|---|---|---|---|---|---|---|---|
| Polyol C | 20 | 20 | 20 | 20 | | | | |
| Polyol D | 31.8 | 31.8 | 31.8 | 31.8 | 31.8 | 31.8 | 31.8 | 31.8 |
| Polyol E | | | | | 20 | 20 | 20 | 20 |
| FR 1 | 20 | 20 | 20 | 20 | 20 | 20 | 20 | 20 |
| Stabi | 2 | 2 | 2 | 2 | 2 | 2 | 2 | 2 |
| Water | 1,2 | 1,2 | 1,2 | 1,2 | 1,2 | 1,2 | 1,2 | 1,2 |
| Aromatic polyetherol 1 | 25 | | | | 25 | | | |
| Aromatic polyetherol 2 | | 25 | | | | 25 | | |
| Aromatic polyetherol 3 | | | 25 | | | | 25 | |
| Aromatic polyetherol 4 | | | | 25 | | | | 25 |
| | | | | | | | | |
| n-pentane | 11 | 11 | 11 | 11 | 11 | 11 | 11 | 11 |
| | | | | | | | | |
| Blend aspect | Turbid | Clear | Clear | Clear but 2-phase separation | Turbid | Clear | Clear but 2-phase separation | Clear but 2-phase separation |
| N-pentane separation at RT (after 24 h) | Yes | No | No | No | Yes | No | No | No |
| n-pentane separation at 5°C (after 24 h) | Yes | No | No | No | Yes | No | No | No |

As it can be seen in Table 1, the polyol components (comparative example 1 and 3) containing comparative aromatic polyetherol 1 were turbid and showed phase separation of blowing agent. The polyol components containing comparative aromatic polyetherol 3 did not show phase separation of blowing agent, however when polyol E was introduced in Comparative example 4 polyol component was not stable and phase separation was observed. The polyol components containing comparative aromatic polyetherol 4 (comparative Examples 5 and 6) did not show separation of blowing agent, however the whole polyol components were not stable and phase separation was observed. Polyol components (Examples 1 and 2) containing inventive aromatic polyetherol 2 are clear and stable.

Furthermore, rigid foams were prepared using the polyol components of Comparative example 1 as well as Example 1 given in Table 1 (weight parts). Those polyol components were then mixed with Isocyanate A at an index of 120 using Dimethylcyclohexylamine as a catalyst so that gel time was 45 sec and the obtained reaction mixture was placed into a closed mold and reacted to produce a rigid polyurethane foam having an average density of 33 g/liter. The quality of both, free-rise and molded foams, were examined and the foam containing inventive aromatic polyetherol 2 was dimensionally stable without shrinkage, with fine foam structure and surface, on the other hand the foam containing comparative Aromatic polyetherol 1 had coarse cell structure containing also some defects (e.g pinholes and larger holes) within the foam and on the surface.

Furthermore, the rigid foams using polyol components given in table 2 (weight parts) were prepared for further investigation of mechanical properties and burning behavior. The polyol component was mixed with Isocyanate A at an index of 102 and the obtained reaction mixture was placed into a closed mold and reacted to produce a rigid polyurethane foam having an average density of 40 g/liter.

**Table 2**

| | Comp. Example 5 | Example 3 | Comp. Example 6 |
|---|---|---|---|
| Polyol A | 9,0 | 9,0 | 9,0 |
| Polyol B | 2,5 | 2,5 | 2,5 |
| Polyol C | 2,5 | 2,5 | 2,5 |
| Polyol D | 2,5 | 2,5 | 2,5 |
| FR 1 | 19,5 | 19,5 | 19,5 |
| FR 2 | 5 | 5 | 5 |
| FR 3 | 14 | 14 | 14 |
| FR 4 | 7,5 | 7,5 | 7,5 |
| Stabi | 1,5 | 1,5 | 1,5 |
| Catalyst 1 | 0,5 | 0,5 | 0,5 |
| Catalyst 2 | 0,4 | 0,4 | 0,4 |
| Catalyst 3 | 0,3 | 0,3 | 0,3 |
| Blowing agent 2 | 4,8 | 4,8 | 4,8 |
| Aromatic polyetherol 1 | 30 | | |
| Aromatic polyetherol 2 | | 30 | |
| Aromatic polyetherol 3 | | | 30 |

Compression strength was measured according to DIN EN ISO 844 and average values of compression along an axis parallel and axis perpendicular to the flow direction, defined as being from the pour side to the opposite side of the foam block, are reported. Thermal conductivity of 20×20×3 cm³ foam samples (which were cut 24 hours after foam preparation) was measured at 23 °C using λ-Meter EP500e (Lambda-MeBtechnik GmbH Dresden) and the recorded value is referred to as the initial thermal conductivity. Burning behavior was measured according to DIN 4102 (B2 test).

| Properties of the foam | Comp. Example 1 | Example 1 | Comp. Example 2 |
|---|---|---|---|
| Dimensional stability | good | good | shrinkage |
| Compression strength [N/mm²] | 0,17 | 0,17 | 0,14 |
| Thermal conductivity [mW/mK] | 26 | 26 | 26 |
| Burning behavior according to B2 test [cm] | 9 | 9 | 9 |

The foam containing inventive Aromatic polyetherol 2 showed good mechanical performance and burning behavior.

## Claims

1. Aromatic polyetherol (b1) obtainable by condensation of aromatic alcohol (b11) and aldehyde (b12) wherein the aromatic alcohol (b11) comprises a mixture, consisting of at least one alkoxylation product (b111) of an aromatic alcohol, the alkoxylation product (b111) having a hydroxyl value of 110 to 500 mg KOH/g and an alkylated aromatic alcohol (b112) which may be alkoxylated and wherein the alkyl group is bonded to the aromatic ring, the alkyl group having 4 to 18 carbon atoms,
wherein the molar ratio of the alcoxylation product (b111) of the aromatic alcohol and the alkylated aromatic alcohol (b112) is in the range of 5 : 1 to 2 : 1 and
the average OH-functionality of the polyetherol (b1) is 2 to 8.

2. Aromatic polyetherol (b1) according to claim 1, wherein the molar ratio of aromatic alcohol (b11) and aldehyde (b12) is 0.7 to 1.5.

3. Aromatic polyetherol (b1) according to claim 1 or 2, wherein the alkoxylation product (b111) of the aromatic alcohol is obtained by alkoxylation of phenol.

4. Aromatic polyetherol (b1) according to any of claims 1 to 3, wherein alkoxylation product (b111) of the aromatic alcohol is obtained by alkoxylation with propylene oxide or a mixture of ethylene oxide and propylene wherein the molar ratio of ethylene oxide and propylene oxide is 40 to 60 to 0 : 100.

5. Aromatic polyetherol (b1) according to any of claims 1 to 4, wherein the alcoxylation product (b111) of the aromatic alcohol comprises 60 % to 100 % of secondary OH-groups, based on the total number of OH-groups of the akoxylation product (b111) of the aromatic alcohol.

6. Aromatic polyetherol (b1) according to any of claims 1 to 5, wherein the aldehyde is formaldehyde.

7. Aromatic polyetherol (b1) according to any of claims 1 to 6, wherein the alkylated aromatic alcohol (b112) is an alkyl substituted phenol without alkoxylation.

8. A method for the preparation of a rigid polyisocyanate based foam, comprising mixing
a) polyisocyanate,
b) at least one compound having at least two hydrogen atoms reactive towards isocyanates,
c) optionally flame retardant,
d) blowing agent,
e) catalyst and
f) optionally further additives,
to form a reaction mixture and reacting the reaction mixture to obtain the polyurethane based rigid foam
wherein the compound reactive towards isocyanates (b) comprises the aromatic polyetherol (b1) according to any of the claims 1 to 7.

9. Method according to claim 8 wherein the at least one compound having at least two hydrogen atoms reactive towards isocyanates (b) comprises the aromatic polyetherpolyol (b1) and at least one compound selected from the group consisting of an aromatic polyesterpolyol (b2) and a polyetherpolyol (b3) different from polyether (b1).

10. Method according to claim 8 or 9 **characterized in that** the aromatic polyester polyol (b2) has a hydroxyl number of 200 to 400 mg KOH/g.

11. Method according to any of claims 8 to 10, wherein the aromatic polyesterpolyol (b2) is obtainable by esterification of dicarboxylic acid composition comprising one or more aromatic dicarboxylic acids or derivatives thereof, one or more fatty acids or fatty acid derivatives, one or more aliphatic or cycloaliphatic diols having 2 to 18 carbon atoms or alkoxylates thereof and a polyol having an average functionality of more than 2.

12. Method according to any of claims 8 to 11, wherein the component (b) consists of a mixture of 5 to 70 parts by weight of the aromatic polyester polyol (b1), 0 to 50 parts by weight of the aromatic polyether polyol (b2), 10 to 70 parts by weight of the polyether polyol (b3) and 0 to 15 parts by weight of chain extenders and/or crosslinking agents (b4), based on the total weight of component (b).

13. Method according to any of claims 8 to 12, wherein the blowing agent comprises pentane isomers or mixtures of pentane isomers.

14. Method according to any of claims 8 to 13, wherein compounds (a) to (f) are mixed at an isocyanate index is in the range of 95 to 140.

15. Method according to any of claims 8 to 13, wherein compounds (a) to (f) are mixed at an isocyanate index is in the range of more than 160 to 600.

16. Rigid polyisocyanate based foam, obtainable according to a method of any of claims 8 to 15.

## Patentansprüche

1. Aromatisches Polyetherol (b1), das durch Kondensation von aromatischem Alkohol (b11) und Aldehyd (b 12) erhältlich ist, wobei der aromatische Alkohol (b11) ein Gemisch umfasst, das aus mindestens einem Alkoxylierungsprodukt (b111) eines aromatischen Alkohols, wobei das Alkoxylierungsprodukt (b111) eine Hydroxylzahl von 110 bis 500 mg KOH/g aufweist, und einem alkylierten aromatischen Alkohol (b112), der alkoxyliert sein kann und in dem die Alkylgruppe an den aromatischen Ring gebunden ist, wobei die Alkylgruppe 4 bis 18 Kohlenstoffatome aufweist, besteht, wobei das Molverhältnis von Alkoxylierungsprodukt (b111) des aromatischen Alkohols und alkyliertem aromatischem Alkohol (b112) im Bereich von 5:1 bis 2:1 liegt und die durchschnittliche OH-Funktionalität des Polyetherols (b1) 2 bis 8 beträgt.

2. Aromatisches Polyetherol (b1) nach Anspruch 1, wobei das Molverhältnis von aromatischem Alkohol (b11) und Aldehyd (b12) 0,7 bis 1,5 beträgt.

3. Aromatisches Polyetherol (b1) nach Anspruch 1 oder 2, wobei das Alkoxylierungsprodukt (b111) des aromatischen Alkohols durch Alkoxylierung von Phenol erhalten wird.

4. Aromatisches Polyetherol (b1) nach einem der Ansprüche 1 bis 3, wobei das Alkoxylierungsprodukt (b111) des aromatischen Alkohols durch Alkoxylierung mit Propylenoxid oder einer Mischung von Ethylenoxid und Propylen erhalten wird, wobei das Molverhältnis von Ethylenoxid und Propylenoxid 40 zu 60 bis 0:100 beträgt.

5. Aromatisches Polyetherol (b1) nach einem der Ansprüche 1 bis 4, wobei das Alkoxylierungsprodukt (b111) des aromatischen Alkohols 60 % bis 100 % sekundäre OH-Gruppen, bezogen auf die Gesamtzahl von OH-Gruppen des Alkoxylierungsprodukts (b111) des aromatischen Alkohols, enthält.

6. Aromatisches Polyetherol (b1) nach einem der Ansprüche 1 bis 5, wobei es sich bei dem Aldehyd um Formaldehyd handelt.

7. Aromatisches Polyetherol (b1) nach einem der Ansprüche 1 bis 6, wobei es sich bei dem alkylierten aromatischen Alkohol (b112) um ein alkylsubstituiertes Phenol ohne Alkylierung handelt.

8. Verfahren zur Herstellung eines Hartschaumstoffs auf Polyisocyanatbasis, bei dem man
a) Polyisocyanat,
b) mindestens eine Verbindung mit zwei gegenüber Isocyanaten reaktiven Wasserstoffatomen,
c) gegebenenfalls Flammschutzmittel,
d) Treibmittel,
e) Katalysator und
f) gegebenenfalls weitere Zusatzstoffe mischt, wobei man eine Reaktionsmischung erhält, und die Reaktionsmischung umsetzt, wobei man den Hartschaumstoffs auf Polyurethanbasis erhält,
wobei die gegenüber Isocyanaten reaktive Verbindung (b) das aromatische Polyetherol (b1) nach einem der Ansprüche 1 bis 7 umfasst.

9. Verfahren nach Anspruch 8, bei dem die mindestens eine Verbindung mit zwei gegenüber Isocyanaten reaktiven Wasserstoffatomen (b) das aromatische Polyetherol (b1) und mindestens eine Verbindung aus der Gruppe bestehend aus einem aromatischen Polyesterpolyol (b2) und einem Polyetherpolyol (b3), das von dem Polyether (b1) verschieden ist, umfasst.

10. Verfahren nach Anspruch 8 oder 9, **dadurch gekennzeichnet, dass** das aromatische Polyesterpolyol (b2) eine Hydroxylzahl von 200 bis 400 mg KOH/g aufweist.

11. Verfahren nach einem der Ansprüche 8 bis 10, bei dem das aromatische Polyesterpolyol (b2) durch Veresterung einer Dicarbonsäurezusammensetzung, die eine oder mehrere Dicarbonsäuren oder Derivate davon, eine oder mehrere Fettsäuren oder Fettsäurederivate, ein oder mehrere aliphatische oder cycloaliphatischen Diole mit 2 bis 18 Kohlenstoffatomen oder Alkoxylate davon und ein Polyol mit einer durchschnittlichen Funktionalität von mehr als 2 umfasst, erhältlich ist.

12. Verfahren nach einem der Ansprüche 8 bis 11, bei dem die Komponente (b) aus einer Mischung von 5 bis 70 Gewichtsteilen des aromatischen Polyesterpolyols (b1), 0 bis 50 Gewichtsteilen des aromatischen Polyetherpolyols (b2), 10 bis 70 Gewichtsteilen des Polyetherpolyols (b3) und 0 bis 15 Gewichtsteilen an Kettenverlängerungsmitteln und/oder Vernetzungsmitteln (b4), bezogen auf das Gesamtgewicht der Zusammensetzung (b), besteht.

13. Verfahren nach einem der Ansprüche 8 bis 12, bei dem das Treibmittel Pentanisomere oder Gemische von Pentanisomeren umfasst.

14. Verfahren nach einem der Ansprüche 8 bis 13, bei dem die Verbindungen (a) bis (f) bei einem Isocyanatindex im Bereich von 95 bis 140 gemischt werden.

15. Verfahren nach einem der Ansprüche 8 bis 13, bei dem die Verbindungen (a) bis (f) bei einem Isocyanatindex im Bereich von mehr als 160 bis 600 gemischt werden.

16. Hartschaumstoff auf Polyisocyanatbasis, der nach einem Verfahren gemäß einem der Ansprüche 8 bis 15 erhältlich ist.

## Revendications

1. Polyétherol aromatique (b1) pouvant être obtenu par condensation d'un alcool aromatique (b11) et d'un aldéhyde (b12), l'alcool aromatique (b11) comprenant un mélange, constitué d'au moins un produit d'alcoxylation (b111) d'un alcool aromatique, le produit d'alcoxylation (b111) possédant un indice d'hydroxyle de 110 à 500 mg de KOH/g et d'un alcool aromatique alkylé (b112) qui peut être alcoxylé et le groupe alkyle étant lié au cycle aromatique, le groupe alkyle possédant 4 à 18 atomes de carbone, le rapport molaire du produit d'alcoxylation (b111) de l'alcool aromatique et de l'alcool aromatique alkylé (b112) étant dans la plage de 5 : 1 à 2 : 1 et la fonctionnalité d'OH moyenne du polyétherol (b1) étant de 2 à 8.

2. Polyétherol aromatique (b1) selon la revendication 1, le rapport molaire d'alcool aromatique (b11) et d'aldéhyde (b12) étant de 0,7 sur 1,5.

3. Polyétherol aromatique (b1) selon la revendication 1 ou 2, le produit d'alcoxylation (b111) de l'alcool aromatique étant obtenu par alcoxylation de phénol.

4. Polyétherol aromatique (b1) selon l'une quelconque des revendications 1 à 3, le produit d'alcoxylation (b111) de l'alcool aromatique étant obtenu par alcoxylation avec de l'oxyde de propylène ou un mélange d'oxyde d'éthylène et de propylène, le rapport molaire d'oxyde d'éthylène et d'oxyde de propylène étant de 40 à 60 à 0 : 100.

5. Polyétherol aromatique (b1) selon l'une quelconque des revendications 1 à 4, le produit d'alcoxylation (b111) de l'alcool aromatique comprenant 60 % à 100 % de groupes OH secondaire, sur la base du nombre total de groupes OH du produit d'alcoxylation (b111) de l'alcool aromatique.

6. Polyétherol aromatique (b1) selon l'une quelconque des revendications 1 à 5, l'aldéhyde étant le formaldéhyde.

7. Polyétherol aromatique (b1) selon l'une quelconque des revendications 1 à 6, l'alcool aromatique alkylé (b112) étant un phénol substitué par alkyle sans alcoxylation.

8. Procédé pour la préparation d'une mousse à base de polyisocyanate rigide, comprenant le mélange
a) d'un polyisocyanate,
b) d'au moins un composé possédant au moins deux atomes d'hydrogène réactifs envers des isocyanates,
c) éventuellement un retardateur de flammes,
d) un agent gonflant,
e) un catalyseur et
f) éventuellement d'autres additifs,
pour former un mélange réactionnel et la mise en réaction du mélange réactionnel pour obtenir la mousse rigide à base de polyuréthane,
le composé réactif envers des isocyanates (b) comprenant le polyétherol aromatique (b1) selon l'une quelconque des revendications 1 à 7.

9. Procédé selon la revendication 8, l'au moins un composé possédant au moins deux atomes d'hydrogène réactifs envers des isocyanates (b) comprenant le polyétherol aromatique (b1) et au moins un composé choisi dans le groupe constitué par un polyesterpolyol aromatique (b2) et un polyétherpolyol (b3) différent du polyéther (b1).

10. Procédé selon la revendication 8 ou 9 **caractérisé en ce que** le polyester polyol aromatique (b2) possède un indice d'hydroxyle de 200 à 400 mg de KOH/g.

11. Procédé selon l'une quelconque des revendications 8 à 10, le polyesterpolyol aromatique (b2) pouvant être obtenu par estérification d'une composition d'acide dicarboxylique comprenant un ou plusieurs acides dicarboxyliques aromatiques ou des dérivés correspondants, un ou plusieurs acides gras ou dérivés d'acides gras, un ou plusieurs diols aliphatiques ou cycloaliphatiques possédant 2 à 18 atomes de carbone ou des alcoxylates correspondants et un polyol possédant une fonctionnalité moyenne de plus de 2.

12. Procédé selon l'une quelconque des revendications 8 à 11, le composant (b) étant constitué d'un mélange de 5 à 70 parties en poids du polyesterpolyol aromatique (b1), 0 à 50 parties en poids du polyétherpolyol aromatique (b2), 10 à 70 parties en poids du polyétherpolyol (b3) et 0 à 15 parties en poids d'agents d'extension de chaînes et/ou d'agents de réticulation (b4), sur la base du poids total du composant (b).

13. Procédé selon l'une quelconque des revendications 8 à 12, l'agent de gonflement comprenant des isomères du pentane ou des mélanges d'isomère du pentane.

14. Procédé selon l'une quelconque des revendications 8 à 13, les composés (a) à (f) étant mélangés à raison d'un indice d'isocyanate qui est dans la plage de 95 à 140.

15. Procédé selon l'une quelconque des revendications 8 à 13, les composés (a) à (f) étant mélangés à raison d'un indice d'isocyanate qui est dans la plage de plus de 160 à 600.

16. Mousse à base de polyisocyanate rigide, pouvant être obtenue selon un procédé selon l'une quelconque des revendications 8 à 15.
